# EUROPÄISCHE PATENTSCHRIFT

(11) **EP 2 706 251 B1**
(45) Veröffentlichungstag und Bekanntmachung des Hinweises auf die Patenterteilung: **16.08.2017**
(21) Anmeldenummer: 13182917.8
(22) Anmeldetag: 04.09.2013
(51) Int. Cl.: F16D 13/64

(54) **Reibkupplung**
Friction clutch
Embrayage à friction

(30) Priorität: 07.09.2012 DE 102012215927
(43) Veröffentlichungstag der Anmeldung: 12.03.2014
(73) Patentinhaber: Schaeffler Technologies AG & Co. KG, 91074 Herzogenaurach (DE)
(72) Erfinder: Güllük, Toros, 77839 Lichtenau (DE); Maienschein, Stephan, 76534 Baden-Baden (DE)

(56) Entgegenhaltungen:
- DE-A1- 10 230 650
- DE-A1- 19 734 678
- US-A1- 2001 002 641

## Beschreibung

Die Erfindung betrifft eine Reibkupplung für ein Kraftfahrzeug mit wenigstens einer Reiblamelle, die drehbar um eine Drehachse angeordnet ist, aufweisend einen Scheibenkörper und eine an einer ersten Stirnfläche der Reiblamelle angeordnete erste Reibfläche, wobei gegenüberliegend zur ersten Reibfläche eine erste Gegenreibfläche vorgesehen ist, wobei an der ersten Reibfläche ein erster an dem Scheibenkörper der Reiblamelle befestigter Reibbelag angeordnet ist und an der ersten Gegenreibfläche ein erster Gegenreibbelag und ein vom ersten Gegenreibbelag unbedeckter erster Abschnitt vorgesehen sind, wobei der erste Reibbelag ausgebildet ist mit der ersten Gegenreibfläche im Bereich des unbedeckten ersten Abschnitts und der erste Gegenreibbelag ausgebildet ist, mit dem Scheibenkörper der Reiblamelle im Bereich der ersten Reibfläche in Wirkkontakt gebracht zu werden.

Aus der DE 197 34 678 A1 oder aus der US2001/000264 A1 ist ein hydrodynamischer Drehmomentwandler mit einem Gehäuse und einem Kolben bekannt, wobei auf dem Kolben und auf dem Gehäuse jeweils Reibbeläge angeordnet sind, die jeweils mit dem Gehäuse bzw. mit dem Kolben verbunden sind. Die Reibbeläge sind radial nebeneinander liegend oder konzentrisch am Gehäuse bzw. am Kolben angeordnet.

Die DE 102 38 122 B4 zeigt ebenso einen hydrodynamischen Drehmomentwandler mit einer Überbrückungskupplung zur wahlweisen Herstellung einer Drehmomentübertragungsverbindung zwischen einer Gehäuseanordnung und einem Turbinenrad. Dazu ist eine Reibkupplung mit einem Lamellenpaket vorgesehen, wobei Reiblamellen aus einem Metallmaterial mit einem darauf angeordneten Reibbelag vorgesehen sind. Ferner ist zwischen den Reiblamellen jeweils eine Reibscheibe vorgesehen, die ebenso Metallmaterial aufweist. Wird der Kolben betätigt, so werden die Reiblamellen und die Reibscheiben aneinander gedrückt, um einen Kraftschluss zwischen einer Eingangsseite und einer Ausgangsseite hervorzurufen. Bei einem Reibvorgang zwischen dem Reibbelag der Reiblamelle und der Reibscheibe wird die dabei entstehende Wärme im Wesentlichen vollständig in die Reibscheibe eingebracht. Dies kann zu einer lokalen Überhitzung der Reibscheibe führen.

Aufgabe der Erfindung ist es, eine Reibkupplung bereitzustellen, bei der lokale Überhitzungen an Komponenten der Reibkupplung während eines Reibvorgangs bzw. Kupplungsvorgangs vermieden werden können.

Erfindungsgemäß wird diese Aufgabe durch eine Reibkupplung mit den Merkmalen gemäß Anspruch 1 gelöst. Vorteilhafte Ausführungsformen sind in den abhängigen Ansprüchen angegeben.

Entsprechend wird eine Reibkupplung für ein Kraftfahrzeug mit einer Reibkupplung umfassend wenigstens eine Reiblamelle, die drehbar um eine Drehachse angeordnet ist, aufweisend einen Scheibenkörper und eine an einer ersten Stirnfläche der Reiblamelle angeordnete erste Reibfläche, bereitgestellt. Gegenüberliegend zur ersten Reibfläche ist eine erste Gegenreibfläche vorgesehen. An der ersten Reibfläche ist ein erster an dem Scheibenkörper der Reiblamelle befestigter Reibbelag angeordnet und an der ersten Gegenreibfläche sind ein erster Gegenreibbelag und ein vom ersten Gegenreibbelag unbedeckter erster Abschnitt vorgesehen. Der erste Reibbelag ist ausgebildet mit der ersten Gegenreibfläche im Bereich des unbedeckten ersten Abschnitts und der erste Gegenreibbelag ist ausgebildet, mit dem Scheibenkörper der Reiblamelle im Bereich der ersten Reibfläche in Wirkkontakt gebracht zu werden. Ferner ist an einer zur ersten Stirnfläche gegenüberliegenden zweiten Stirnfläche der Reiblamelle eine zweite Reibfläche vorgesehen. An der zweiten Reibfläche ist ein zweiter an dem Scheibenkörper befestigter Reibbelag vorgesehen und an der zweiten Gegenreibfläche sind ein zweiter Gegenreibbelag und ein vom zweiten Gegenreibbelag unbedeckter zweiter Abschnitt vorgesehen. Der zweite Reibbelag ist ausgebildet mit der zweiten Gegenreibfläche im Bereich des unbedeckten zweiten Abschnitts und der zweite Gegenreibbelag ist ausgebildet, mit dem Scheibenkörper der Reiblamelle im Bereich der zweiten Reibfläche in Wirkkontakt gebracht zu werden.

Auf diese Weise wird der Wärmeeintrag in die Komponenten der Reibkupplung, insbesondere in die Reiblamellen, gleichmäßig verteilt, so dass die in der Reibkupplung vorhandenen Wärmekapazitäten effizient ausgenutzt werden, um eine lokale Überhitzung, insbesondere der Reiblamellen, zu vermeiden.

Besonders vorteilhaft ist, wenn der erste Reibbelag der ersten Reibfläche zu dem ersten Gegenreibbelag der ersten Gegenreibfläche bezogen auf die Drehachse radial innen liegend oder wenn der erste Reibbelag der ersten Reibfläche zu dem ersten Gegenreibbelag der ersten Gegenreibfläche bezogen auf die Drehachse radial außen liegend angeordnet ist.

Ebenso vorteilhaft ist, wenn der erste Reibbelag der ersten Reibfläche bezogen auf die Drehachse radial innen liegend zu dem zweiten Reibbelag der zweiten Reibfläche angeordnet ist.

Ein besonders hohes Drehmoment kann dann übertragen werden, wenn der erste Reibbelag der ersten Reibfläche und der zweite Reibbelag der zweiten Reibfläche projiziert in Richtung der Drehachse auf die erste oder zweite Reibfläche die erste oder zweite Reibfläche im Wesentlichen vollständig bedecken.

Werden der erste Reibbelag und der zweite Reibbelag projiziert in Richtung der Drehachse auf die erste oder zweite Reibfläche radial überlappend an der Reiblamelle angeordnet, so kann der Wärmeeintrag in die Reiblamelle durch den ersten Gegenreibbelag bzw. durch den zweiten Gegenreibbelag in die Reiblamelle beim Reibvorgang versetzt eingebracht werden, so dass die zu Beginn eines Reibvorgangs vorhandenen Wärmekapazitäten ausgenützt werden, um so eine lokale Überhitzung der Reiblamelle zu vermeiden.

In einer weiteren Ausführungsform weisen der erste oder zweite Reibbelag und der korrespondierende erste oder zweite Gegenreibbelag in radialer Richtung eine im Wesentlichen identische Erstreckung auf. Dies hat den Vorteil, dass zur Herstellung eines Lamellenpakets mit gestapelten Reiblamellen ausschließlich zwei Typen von Reibbelägen notwendig sind und so in der Fertigung der Reibkupplung eine geringe Teilevielfalt vorherrscht.

Ein besonders gleichmäßiger Wärmeeintrag in die Reiblamelle bzw. in die Gegenreibfläche erfolgt dann, wenn die Reiblamelle an der ersten Reibfläche einen dritten Reibbelag aufweist, der radial beabstandet zum ersten Reibbelag an dem Scheibenkörper der Reiblamelle angeordnet ist.

Die Gleichmäßigkeit des Wärmeeintrags kann dadurch gesteigert werden, dass der erste Gegenreibbelag bei dem Wirkkontakt mit dem Scheibenkörper der Reiblamelle zwischen dem ersten Reibbelag und dem dritten Reibbelag der ersten Reibfläche angeordnet ist.

In einer weiteren Ausführungsform weist die Reiblamelle an der zweiten Reibfläche einen vierten Reibbelag aufweist, der radial beabstandet zum zweiten Reibbelag an dem Scheibenkörper der Reiblamelle angeordnet ist. Auf diese Weise können sowohl der zweite Reibbelag als auch der vierte Reibbelag hinreichend mit Kühlöl versorgt werden.

Der Wärmeeintrag gegen die Reiblamelle ist besonders gleichmäßig, wenn der erste Reibbelag der ersten Reibfläche zum zweiten Reibbelag der zweiten Reibfläche und der dritte Reibbelag der ersten Reibfläche zu dem vierte Reibbelag der zweiten Reibfläche symmetrisch gegenüberliegend am Scheibenkörper der Reiblamelle angeordnet sind.

Ein Pufferspeicher für die in den Scheibenkörper eingebrachte Wärme kann ausgebildet werden, wenn der zweite Reibbelag der ersten Reibfläche zum vierten Reibbelag der zweiten Reibfläche gegenüberliegend am Scheibenkörper der Reiblamelle angeordnet ist, wobei der zweite Reibbelag der zweiten Reibfläche direkt angrenzend an den vierten Reibbelag an der zweiten Reibfläche angeordnet ist.

Die Reibkupplung kann als Anfahrkupplung, insbesondere als Reibkupplung in einem Hybridantriebsstrang, vorzugsweise als nasslaufende Anfahrkupplung ausgebildet sein. Auch kann die Reibkupplung als Doppelkupplung oder Wandlerüberbrückungskupplung ausgebildet sein.

Die Erfindung wird im Folgenden unter Bezugnahme auf die Abbildungen ausführlich beschrieben. Dabei werden gleiche Bauteile mit gleichen Bezugszeichen benannt. Es zeigen im Einzelnen:
Figur 1 eine Schnittansicht durch eine Reibkupplung gemäß einer ersten Ausführungsform,
Figur 2 einen Ausschnitt der in Figur 1 gezeigten Schnittansicht,
Figur 3 eine Schnittansicht durch eine Reibkupplung gemäß einer zweiten Ausführungsform,
Figur 4 eine Schnittansicht durch eine Reibkupplung gemäß einer dritten Ausführungsform,
Figur 5 eine Schnittansicht durch eine Reibkupplung gemäß einer vierten Ausführungsform,
Figur 6 zeigt die in den Figuren 2 bis 4 gezeigte Reibkupplung in eingekuppeltem Zustand,
Figur 7 eine Schnittansicht durch eine Reibkupplung gemäß einer fünften Ausführungsform,
Figur 8 eine Schnittansicht durch eine Reibkupplung gemäß einer sechsten Ausführungsform,
Figur 9 eine Schnittansicht durch eine Reibkupplung gemäß einer siebten Ausführungsform,
Figur 10 eine Schnittansicht durch eine Reibkupplung gemäß einer achten Ausführungsform, und
Figur 11 eine Schnittansicht durch eine Reibkupplung gemäß einer neunten Ausführungsform.

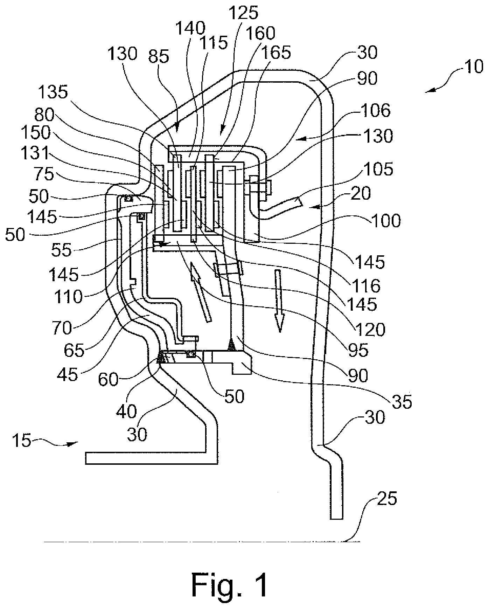

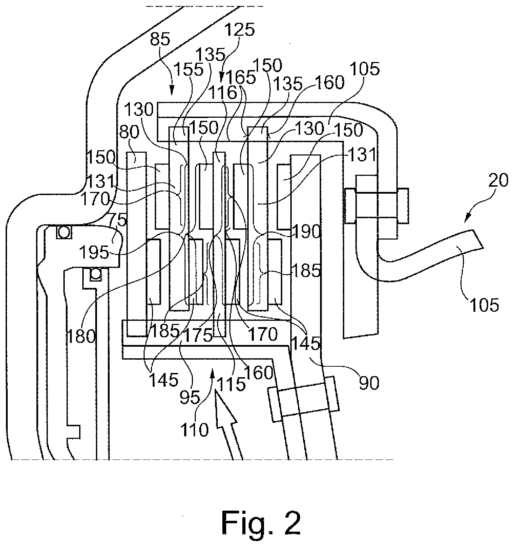

Figur 1 zeigt eine Schnittansicht durch eine Reibkupplung 10 gemäß einer ersten Ausführungsform und Figur 2 einen Ausschnitt der in Figur 1 gezeigten Reibkupplung 10.

Die Reibkupplung 10 umfasst eine Eingangsseite 15 und eine Ausgangsseite 20, die drehbar um eine Drehachse 25 angeordnet sind. Ferner umfasst die Reibkupplung 10 ein Gehäuse 30 zum Schutz der im Gehäuse 30 angeordneten Komponenten der Reibkupplung 10. Mit dem Gehäuse 30 ist eine innen liegend im Gehäuse 30 angeordnete Zentrierbuchse 35 drehfest über eine Schweißverbindung 40 verbunden. An der Zentrierbuchse 35 ist radial außenseitig ein Kolben 45 angeordnet, der mittels Dichtringen 50 gegenüber dem Gehäuse 30 (in Figur 1 oberseitig dargestellt) und der Zentrierbuchse 35 radial innen liegend abgedichtet ist, so dass der Kolben 45 zusammen mit dem Gehäuse 30 einen Druckraum 55 zwischen dem Kolben 45 und dem Gehäuse 30 ausbildet. Der Druckraum 55 ist über eine Öffnung 60 mit einem hydraulischen System verbunden, so dass über die Öffnung 60 eine Druckflüssigkeit, insbesondere Drucköl, in den Druckraum 50 einleitbar ist. An dem Kolben 45 ist in axialer Richtung ferner ein Fliehölblech 65 angeordnet, das mittels Dichtringen 50 radial innen und außen liegend abgedichtet ist, so dass zwischen den Kolben 45 und dem Fliehölblech 65 ein Fliehöldruckraum 70 ausgebildet wird. Der Kolben 45 weist einen radial außen liegenden Betätigungsabschnitt 75 auf, der in axialer Richtung einer ersten Endlamelle 80 eines Lamellenpakets 85 zugeordnet ist.

Das Lamellenpaket 85 ist radial zwischen einem Innenlamellenträger 90 mit einer Außenverzahnung 95 und einem radial außenseitig zum Lamellenpaket 85 angeordneten Außenlamellenträger 100 angeordnet, der auf einer, zum Lamellenpaket 85, abgewandten Stirnfläche, ein Betätigungselement 105 zur Betätigung eines elastischen Elements eines Torsionsschwingungsdämpfers umfasst.

Das Lamellenpaket 85 umfasst eine Reibanordnung 106 mit einer ersten Gruppe 110 von ersten Reiblamellen 115 mit einem ersten Scheibenkörper 116, der eine Innenverzahnung 120 aufweist, die korrespondierend zur Außenverzahnung 95 des Innenlamellenträgers 90 ausgebildet ist und in diese eingreift. Ferner umfasst das Lamellenpaket 85 eine zweite Gruppe 125 von zweiten Reiblamellen 130, die eine an einem zweiten Scheibenkörper 131 angeordnete Außenverzahnung 135 aufweisen, die in eine korrespondierende Innenverzahnung 140 des Außenlamellenträgers 100 eingreift. Die linksseitig angeordnete erste Endlamelle 80 sowie die Reiblamellen 115, 130 sowohl der ersten als auch der zweiten Gruppe 110, 125 weisen einen ersten Reibbelag 145 auf, der axial rechtsseitig an dem Scheibenkörper 116, 131 der jeweils korrespondierenden Reiblamellen 115, 130 bzw. an der ersten Endlamelle 80 angeordnet ist. Ferner umfassen die zweite Endlamelle 90 sowie die Reiblamellen 115, 130 einen axial linksseitig an der zweiten Endlamelle 90 bzw. an dem Scheibenkörper 116, 131 der Reiblamellen 115, 130 angeordneten zweiten Reibbelag 150, der radial außen liegend bezogen auf die Drehachse 25 zu dem ersten Reibbelag 145 an der zweiten Endlamelle 90 bzw. an dem Scheibenkörper 116, 131 angeordnet und befestigt ist.

Die Reibbeläge 145, 150 können zur Erlangung von gewünschten Reibverhältnissen zwischen den Reiblamellen 115, 130 aus einem geeigneten Material ausgebildet sein, beispielsweise aus einem faserverstärkten Polymermaterial. Die ringförmig ausgebildeten Reibbeläge 145, 150 werden üblicherweise auf dem Scheibenkörper 116, 131 auf jeweils einer Stirnseite 160, 165 des Scheibenkörpers 116, 131 aufgeklebt und verbacken, so dass sich die Reibbeläge 145, 150 auch bei hoher thermischer Belastung nicht vom Scheibenkörper 116, 131 lösen.

Der erste Reibbelag 145 bildet zusammen mit einem radial außen liegenden ersten Abschnitt 170, an dem das Grundmaterial des Scheibenkörpers 116 hervortritt und dieser somit unbedeckt von dem Reibbelag 145 ist, eine erste Reibfläche 175 aus. Der erste Abschnitt 170 wird radial durch die Dimensionierung des gegenüberliegend angeordneten zweiten Reibbelags 150 der zweiten Reiblamelle 130 bestimmt.

Linksseitig weist die erste Reiblamelle 115 eine zweite Reibfläche 180 auf, die aus einem zweiten radial innen liegenden Abschnitt 185, der gegenüberliegend korrespondierend zum ersten Reibbelag 145 an der zweiten Stirnseite 165 am ersten Scheibenkörper 116 vorgesehen ist, und dem radial außen liegend zum zweiten Abschnitt 185 angeordneten zweiten Reibbelag 150 besteht. Im zweiten Abschnitt 185 ist, ebenso wie im ersten Abschnitt 170, kein Reibbelag am zweiten Scheibenkörper 131 vorgesehen und somit unbedeckt ausgestaltet, so dass das Grundmaterial des ersten Scheibenkörpers 116, vorzugsweise Stahl, hervortritt.

Gegenüberliegend zur ersten Reibfläche 175 der ersten Reiblamelle 115 ist eine erste Gegenreibfläche 190 an der zweiten Reiblamelle 135 linksseitig zugeordnet. Die erste Gegenreibfläche 190 ist in der Ausführungsform entsprechend zu der zweiten Reibfläche 180 der ersten Reiblamelle 115 ausgebildet und umfasst somit den radial außen liegenden zweiten Reibbelag 150 als ersten Gegenreibbelag und den gegenüberliegend zum ersten Reibbelag 145 angeordneten zweiten Abschnitt 185. Somit bedeckt der zweite Reibbelag 150 als erster Gegebenreibbelag ausschließlich teilweise nur die erste Gegenreibfläche 190.

An der linksseitig zur ersten Reiblamelle 115 angeordneten zweiten Reiblamelle 135 ist eine zweite Gegenreibfläche 195 angeordnet. Die zweite Gegenreibfläche 195 ist analog zur ersten Reibfläche 175 der ersten Reiblamelle 115 ausgebildet und umfasst somit den ersten Reibbelag 145 als zweiter Gegenreibbelag der ausschließlich teilweise den Scheibenkörper 131 der zweiten Reiblamelle 135 im Bereich der zweiten Gegenreibfläche 195 bedeckt. Radial außenseitig ist zu dem ersten Reibbelag 145 ebenso der erste Abschnitt 170 angeordnet, so dass an diesem der Werkstoff des zweiten Scheibenkörpers 131 unbedeckt hervortritt.

In der Ausführungsform wird die Reibkupplung 10 bzw. das Lamellenpaket 85 zur Bereitstellung einer Drehmomentübertragung vom Innenlammellenträger 90 auf den Außenlamellenträger 100 dadurch betätigt, dass der Kolben 45 linksseitig mit einem Druck beaufschlagt wird. Der Druck wird hierbei durch die Öffnung mittels einer druckbeaufschlagten Hydraulikflüssigkeit in den Druckraum 55 eingebracht. Dadurch wird der Kolben 55 und somit auch der Betätigungsabschnitt 75 des Kolbens 55 nach axial rechts in Richtung des Lamellenpakets 85 verschoben. Dabei drückt der Betätigungsabschnitt 75 linksseitig gegen die erste Endlamelle 80, bis die Reiblamellen 115, 135 aneinander an den Reibbelägen 145, 150 bzw. an den korrespondierend zu den Reibbelägen 145, 150 gegenüberliegend angeordneten Abschnitten 170, 185 anliegen. Durch die Drehzahlunterschiede zwischen der am Innenlamellenträger 90 angeordneten ersten Reiblamellen 115 bzw. ersten Endlamelle 80 und den am Außenlamellenträger 100 angeordneten zweiten Reiblamellen 130 bzw. der zweiten Endlamelle 90 reiben die Reibbeläge 145, 150 an den Abschnitten 170, 185 so lange bis die Drehzahlunterschiede ausgeglichen sind.

Durch die Ausgestaltung der Reibanordnung 106 des Reibpakets 85 kann die bei einem Einkuppeln bzw. Aneinanderreiben der Reiblamellen 115, 130 entstehende Reibwärme in alle Reiblamellen 115, 130 sowie in die Endlamellen 80, 90 eingebracht werden.

Wird der Kolben 45 betätigt, so wird kurzzeitig aufgrund der hohen Drehzahldifferenz zwischen dem Innenlamellenträger 90 und dem Außenlamellenträger 100 bei Kontakt der Gegen-/ Reibflächen 175, 180, 190, 195 aneinander ein hoher Wärmeeintrag in das Lamellenpaket 85 eingebracht. Durch die Werkstoffkombination des aus Stahl gefertigten Scheibenkörpers 116, 131, der sowohl eine höhere Wärmeleitfähigkeit als auch eine höhere Wärmekapazität als der im Reibbelag 145, 150 verwendete Polymer aufweist, erfolgt der Wärmeeintrag vor allem in den Scheibenkörper 116, 131 und nur in geringem Maße jedoch in den Reibbelag 145, 150.

Bei einem kurzzeitigen Wärmeeintrag, wie bei einem Einkuppelvorgang ist die Wärmekapazität zur Aufnahme der Reibwärme prioritär gegenüber der Wärmeleitfähigkeit des Materials des Scheibenkörpers 116, 131. Werden die Reibflächen 175, 180, wie oben beschrieben, ausgestaltet, so hat dies zur Folge, dass bei einem Einkuppelvorgang in dem ersten Abschnitt 170, der ersten Reibfläche 175 Reibwärme aus dem Reibvorgang durch den korrespondierend gegenüberliegend angeordneten zweiten (Gegen-) Reibbelag 150 der ersten Gegenreibfläche 190 bzw. in den zweiten Abschnitt 180 durch den gegenüberliegend angeordneten ersten (Gegen-) Reibbelag 145 der zweiten Gegenreibfläche 195 gleichmäßig über die gesamte Reibfläche 175, 180 in den Scheibenkörper 116, 131 eingebracht werden kann. Somit kann die vorhandene Wärmekapazität im Bereich der ersten Reibfläche 175 und 180 der Scheibenkörper 116, 131 vollständig zur Pufferung der Reibwärme ausgenutzt werden. Auf diese Weise kann den Reiblamellen 115, 130 gegenüber bisher bekannten Bauformen eine doppelt so hohe Wärmekapazität zur Verfügung gestellt werden. Aufgrund der gegenüber aus dem Stand der Technik bekannten Reibanordnungen vergrößerten Wärmekapazität der Reibkupplung 10 sind die Betriebstemperaturen des Lamellenpakets 85 bzw. der Reibkupplung 10 gegenüber bekannten Reibkupplungen deutlich reduziert. Dies führt zu einem geringeren Verschleiß der Reibbeläge 145, 150 und somit zu einer längeren Haltbarkeit der Reibkupplung 10. Auch wird durch die verringerten Temperaturen eine Überhitzung des in der Reibkupplung 10 vorhandenen Öls vermieden und die thermische Belastung des Öls reduziert.

Durch den Reibvorgang zwischen den Reiblamellen 115, 130 wird ein durch den Innenlamellenträger 90 auf die zweiten Reiblamellen 130 und über die an dem zweiten Scheibenkörper 131 angeordnete Außenverzahnung 135 in die Innenverzahnung 140 des Außenlamellenträgers 100 eingebracht und an dem Betätigungselement 105 ein Torsionsschwingungsdämpfer (nicht dargestellt) bereitgestellt. Dabei ist das Betätigungselement 105 ausgelegt nicht dargestellte, elastische Elemente des Torsionsschwingungsdämpfers zu betätigen.

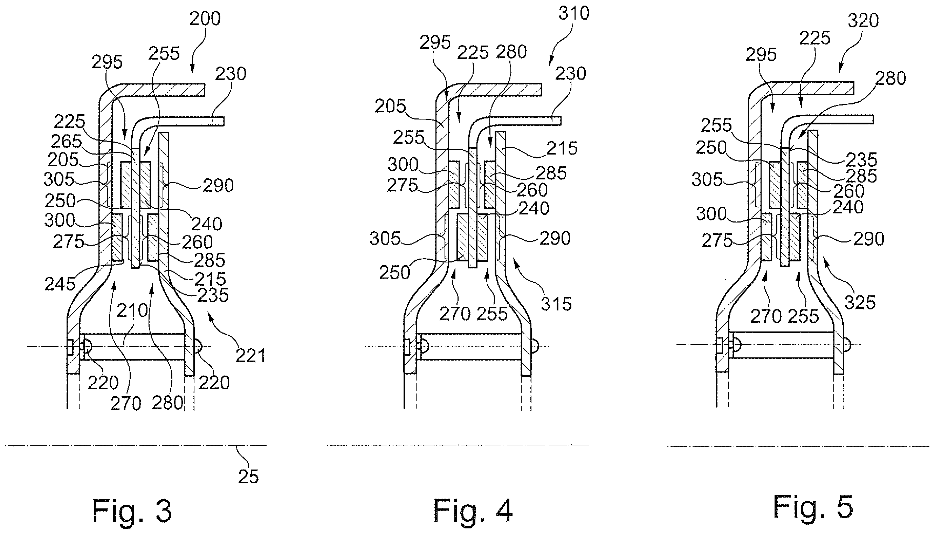

Figur 3 zeigt eine Schnittansicht durch eine Reibkupplung 200 gemäß einer zweiten Ausführungsform. Die Reibkupplung 200 umfasst dabei ein linksseitig angeordnetes Gehäuse 205, das radial innen liegend über eine Blattfeder 210 mit einem Kolben 215 verbunden ist. Die Verbindung zwischen dem Gehäuse 205 und der Blattfeder 210 bzw. zwischen dem Kolben 215 und der Blattfeder 210 erfolgt mittels einer Nietverbindung 220. Von der Blattfeder 210 radial nach außen hin verjüngt sich sowohl das Gehäuse 205 als auch der Kolben 215. Radial nach außen hin nach der Verjüngung des Gehäuses 205 bzw. des Kolbens 215 ist zwischen diesen eine Reibanordnung 221 mit einer Reiblamelle 225 angeordnet. Die Reiblamelle 225 weist radial außenseitig ein sich in axialer Richtung erstreckendes Betätigungselement 230 auf, das ausgelegt ist, einen Torsionsschwingungsdämpfer (nicht dargestellt) zu betätigen.

An der Reiblamelle 225 ist rechtsseitig an einer ersten Stirnfläche 235 ein erster Reibbelag 240 angeordnet. Gegenüberliegend zu der ersten Stirnfläche 235 ist symmetrisch an einer zweiten Stirnfläche 245 der Reiblamelle 225 ein zweiter Reibbelag 250 angeordnet, der identisch zu dem ersten Reibbelag 240 ausgebildet ist. Eine erste Reibfläche 255 wird durch den ersten Reibbelag 240 und den radial innen liegend zum ersten Reibbelag 240 angeordneten ersten Abschnitt 260 ausgebildet. An dem ersten Abschnitt 260 weist ein Scheibenkörper 265 der Reiblamelle 225 keine Beschichtung, insbesondere keinen Reibbelag 240, auf, so dass der Grundwerkstoff, vorzugsweise Stahl, hier hervortritt. Gegenüberliegend ist an der zweiten Stirnseite 245 der Reiblamelle 225 eine zweite Reibfläche 270 angeordnet, die durch den zweiten Reibbelag 250 und einen radial innen liegend analog zum ersten Abschnitt 260 ausgebildeten zweiten Abschnitt 275 gebildet ist.

Eine erste Gegenreibfläche 280, die gegenüberliegend zur ersten Reibfläche 255 am Kolben 215 angeordnet ist, wird durch einen am Kolben 215 befestigten und korrespondierend zum ersten Abschnitt 260 der ersten Reibfläche 255 ausgebildeten ersten Gegenreibbelag 285 und einen radial außenseitig zum ersten Gegenreibbelag 285 angeordneten dritten Abschnitt 290, der in seiner radialen Erstreckung korrespondierend zum ersten Reibbelag 240 der ersten Reibfläche 255 ausgebildet ist, gebildet.

Analog zur ersten Gegenreibfläche ist am Gehäuse 205 eine zweite Gegenreibfläche 295 vorgesehen, die gegenüberliegend zur zweiten Reibfläche 270 der Reiblamelle 225 am Gehäuse 205 angeordnet ist. Dabei umfasst die zweite Gegenreibfläche 295 einen zweiten Gegenreibbelag 300, der gegenüberliegend zum zweiten Abschnitt 275 ausgebildet und am Gehäuse 205 befestigt ist. Die zweite Gegenreibfläche 295 umfasst ferner einen vierten Abschnitt 305 der radial außenseitig zu dem zweiten Gegenreibbelag 300 an der zur Reiblamelle 225 zugewandten Seite des Gehäuses 205 angeordnet ist. Dabei ist der vierte Abschnitt 305 in seiner radialen Erstreckung entsprechend dem dritten Abschnitt 290 sowie den Reibbelägen 240, 250 ausgebildet. Sowohl im dritten Abschnitt 290 als auch im vierten Abschnitt 305 ist keine Beschichtung, insbesondere kein Gegenreibbelag vorgesehen, so dass sowohl im dritten Abschnitt 290 als auch im vierten Abschnitt 305 das unbedeckte Grundmaterial des Kolbens 215 bzw. des Gehäuses 205 hervortritt.

Figur 4 zeigt eine Schnittansicht durch eine Reibkupplung 310 gemäß einer dritten Ausführungsform. Die Reibkupplung 310 entspricht dabei im Wesentlichen der in Figur 3 gezeigten Ausführungsform der Reibkupplung. Jedoch weist die Reibkupplung 310 eine alternative Reibanordnung 315 der oben beschriebenen Reibbeläge 240, 250 bzw. Gegenreibbeläge 280, 300 an den beiden Reibflächen bzw. den beiden Gegenreibflächen 280, 295 auf. Abweichend zu der in Figur 3 gezeigten Ausführungsform der Reibkupplung weist die in Figur 4 gezeigte Reibkupplung 310 die Reibanordnung 315 der Reibbeläge 240, 250, 280, 300 auf, so dass die am Scheibenkörper 265 angeordneten Reibbeläge 240, 250 radial innen liegend zu den Gegenreibbelägen 280, 300 der Gegenreibflächen 280, 295 angeordnet sind. Korrespondierend zu der Anordnung der Reibbeläge 240, 250 bzw. der Gegenreibbeläge 285, 300 sind der erste Abschnitt 260 bzw. zweite Abschnitt 275 der ersten Reibfläche 255 bzw. der zweiten Reibfläche 270 radial außen liegend zu dem ersten Reibbelag 240 bzw. dem zweiten Reibbelag 250 angeordnet. Der dritte Abschnitt 290 ist radial innen liegend zum ersten Gegenreibbelag 285 und gegenüberliegend zum ersten Reibbelag 240 der ersten Reibfläche 255 angeordnet. Der vierte Abschnitt 305 der zweiten Gegenreibfläche 295 ist radial innen liegend zum zweiten Gegenreibbelag 300 und gegenüberliegend und korrespondierend zum zweiten Reibbelag 250 am Kolben 205 angeordnet und ausgebildet.

Figur 5 zeigt eine Schnittansicht durch eine Reibkupplung 320 gemäß einer vierten Ausführungsform. Die Reibkupplung 320 umfasst eine weitere alternative Reibanordnung 325, die aus einer Kombination der in Figur 3 gezeigten Reibanordnung und der in Figur 4 gezeigten Reibanordnung 315 besteht. Die Reibkupplung 320 ist, abgesehen von der Reibanordnung 325, identisch zu der in den Figuren 3 und 4 gezeigten Reibkupplung ausgebildet. Dabei entspricht die radial innen liegende Anordnung der ersten Reibfläche 255 der in Figur 4 gezeigten rechtsseitigen Anordnung des ersten Reibbelags 240 zu dem Abschnitt 260. Auch die erste Gegenreibfläche 280 ist entsprechend der in Figur 4 erläuterten Reibanordnung ausgestaltet.

An der gegenüberliegend zur ersten Stirnfläche 235 angeordneten zweiten Stirnfläche 245 entspricht die Anordnung des zweiten Reibbelags 250 bzw. des zweiten Gegenreibbelags 300 der in Figur 3 dargelegten Reibanordnung. Somit ist der erste Reibbelag 240 radial innen liegend zu dem zweiten Reibbelag 250 an dem Scheibenkörper 265 der Reiblamelle 225 angeordnet.

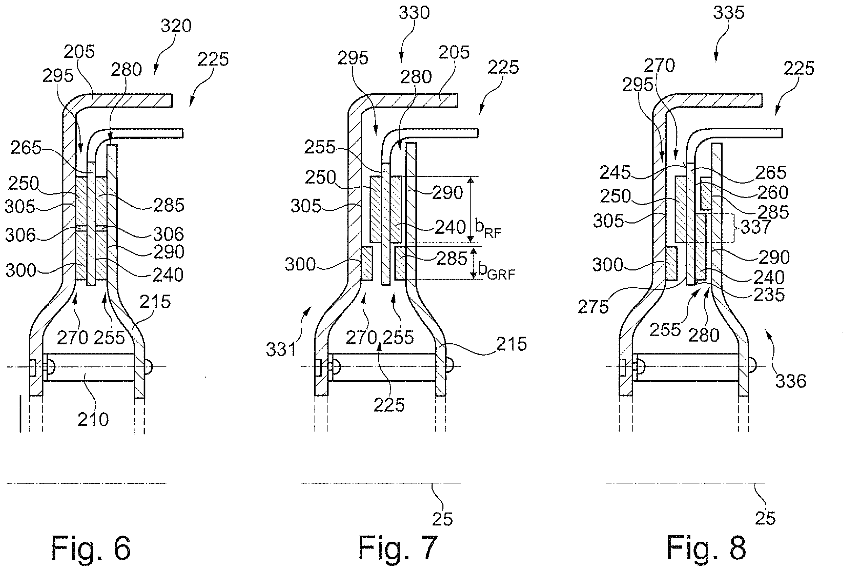

Figur 6 zeigt eine Schnittansicht durch die in Figur 5 gezeigte Reibkupplung 320 gemäß einer vierten Ausführungsform in eingekuppeltem Zustand. Der Kolben 215 wird zur Betätigung mit Drucköl beaufschlagt und nach links in Richtung dem Gehäuse 205 verschoben. Dies führt dazu, dass die Reibbeläge 240, 250 der ersten bzw. zweiten Reibfläche 255, 270 an dem dritten bzw. vierten Abschnitt 290, 305 der ersten bzw. zweiten Gegenreibfläche 280, 295 anliegen. Ebenso liegen die Gegenreibbeläge 285, 300 der ersten bzw. zweiten Gegenreibfläche 285, 295 an dem ersten bzw. zweiten Abschnitt 260, 275 und somit direkt am Scheibenkörper 265 an. Dies hat den Vorteil, dass die Wärme nicht nur in das Gehäuse 205 bzw. in den Kolben 215 sondern auch in die Reiblamelle bzw. in den Scheibenkörper 265 eingebracht wird. Um eine bessere Kühlung während des Reibvorgangs zu bewerkstelligen, sind die Reibbeläge 240, 250 zu den Gegenreibbelägen 285, 300 radial beabstandet angeordnet, so dass Kühlöl durch einen durch die beabstandete Anordnung ausgebildeten Spalt 306 fließen kann. Die in Figur 5 gezeigte Reibanordnung 325 hat den besonderen Vorteil, dass der Scheibenkörper 265 der Reiblamelle 225 im Wesentlichen vollständig über die gesamte erste bzw. zweite Reibfläche 255, 270 zur Aufnahme der in der Reibung entstehenden Wärme genutzt werden kann.

Figur 7 zeigt eine Schnittansicht durch eine Reibkupplung 330 gemäß einer fünften Ausführungsform. Die Reibkupplung 330 entspricht im Wesentlichen dem in Figur 3 erläuterten Aufbau der dort gezeigten Reibkupplung. Abweichend zu der in Figur 3 gezeigten Ausführungsform ist eine Breite b_{RF} der Reibbeläge 240, 250 entsprechend zu den Wärmekapazitäten des Gehäuses 205 des Scheibenkörpers 265 und des Kolbens 215 gewählt. Aufgrund der geringeren Wärmekapazität des Scheibenkörpers 265 gegenüber dem Gehäuse 205 bzw. dem Kolben 215 ist eine Breite b_{GRF} der Gegenreibbeläge 285, 300 der Gegenreibflächen 280, 295 kleiner gewählt als die radiale erste Breite b_{RF} der Reibbeläge 240, 250 bzw. zweiten Reibfläche 255, 270. Auf diese Weise kann die Wärmekapazität der Reibkupplung 330 erhöht werden und gleichzeitig eine Überhitzung der Reiblamelle 225 im Bereich des Scheibenkörpers 265 vermieden werden. Die Reibflächen 225, 270 sind sowohl in Figur 3 als auch in Figur 7 identisch zueinander ausgebildet. Es ist aber denkbar, die Breite b_{RF} bzw. b_{GRF} an die unterschiedlichen Wärmekapazitäten der Komponenten 205, 215, 255 der Reibkupplung 330 anzupassen, so dass die Reibbeläge 240, 250 unterschiedlich breit sind.

Figur 8 zeigt eine Schnittansicht durch eine Reibkupplung 335 gemäß einer sechsten Ausführungsform. Die Reibanordnung 336 der Reibbeläge 240, 250, bzw. der Gegenreibbeläge 285, 300 entspricht dabei der in Figur 5 gezeigten Reibanordnung 325. Die Ausgestaltung der Reibbeläge 240, 250 hinsichtlich ihrer radialen Erstreckung entspricht dabei der in Figur 7 gezeigten Reibanordnung. Dabei sind, wie in Figur 7, die Reibbeläge 240, 250 radial breiter ausgebildet, als die Gegenreibbeläge 285, 300 der Gegenreibflächen 280, 295. Durch die versetzte Anordnung der ersten Reibbeläge 240, 250 überlappen sich die Reibbeläge 240, 250, wenn der erste oder der zweite Reibbelag 240, 250 auf die korrespondierende Stirnfläche 235, 245 des gegenüberliegenden Reibbelags 240, 250 projiziert wird in einem Überlappungsabschnitt. Wird die Reibkupplung 335 betätigt, so erfolgt der Wärmeeintrag in den Scheibenkörper 265 der Reiblamelle 225 radial innen liegend und radial außen liegend durch die jeweiligen korrespondierenden Gegenreibbeläge 285, 300 in den ersten Abschnitt 260 bzw. in den zweiten Abschnitt 275. Durch die radial getrennte Anordnung der beiden Abschnitte 260, 275 durch den Überlappungsabschnitt 325 kann sowohl eine kurzzeitig hohe Speicherkapazität von Wärme in dem Scheibenkörper 265 der Reiblamelle 225 in den Abschnitten 260, 275 bereitgestellt werden der die Anfangswärme am Beginn eines Einkuppelvorgangs aufnimmt als auch eine Speichermöglichkeit im Überlappungsabschnitt 337 für längere Reibvorgänge. Der Überlappungsabschnitt 337 im Scheibenkörper 265 hat den Vorteil, dass die zu Beginn des Einkuppelvorgangs eingebrachte Wärme in den Überlappungsabschnitt 337 weitergeleitet werden kann und so eine Überhitzung bei einem Dauerreibvorgang, beispielsweise bei einer schlupfenden Kupplung, vermieden wird.

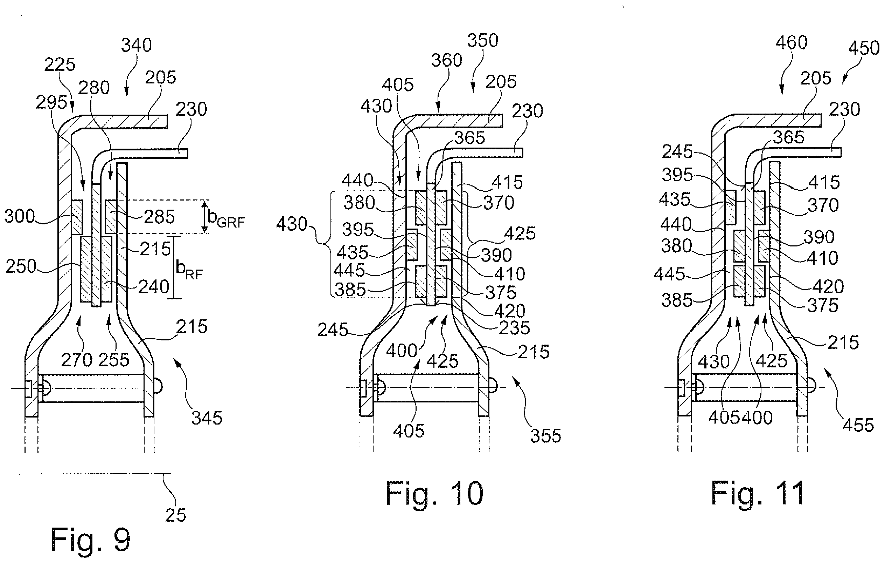

Figur 9 zeigt eine Reibkupplung 340 gemäß einer siebten Ausführungsform. Die Reibkupplung 340 ist im Wesentlichen identisch zu der in Figur 7 gezeigten Reibkupplung ausgeführt. Abweichend hingegen weist jedoch die Reibkupplung 340 eine weitere alternative Reibanordnung 345 auf, deren Reibbeläge 240, 250 der ersten bzw. der zweiten Reibfläche 255, 270 radial innen liegend zu den Gegenreibbelägen 285, 300 am Scheibenkörper 265 angeordnet sind. Diese Ausgestaltung hat den Vorteil, dass durch die größere Breite b_{RF} der Reibfläche 240, 250 gegenüber der radialen Breite b_{GRF} der Gegenreibflächen 285, 300 die Flächen der Reibbeläge 240, 250 vergrößert ausgebildet werden können und somit ein erhöhter Wärmeeintrag in den Kolben 215 bzw. in das Gehäuse 205 erfolgen kann.

Es wird darauf hingewiesen, dass das in den Figuren 3 bis 9 gezeigte Verhältnis der Breite b_{RF} der Reibbeläge 240, 250 zu der Breite b_{GRF} der Gegenreibflächen 285, 300 beispielhaft ist. Selbstverständlich können auch andere als die in den Figuren gezeigten Verhältnisse gewählt werden. Wesentlich ist jedoch bei der Wahl des Verhältnisses der Breite b_{RF} der Reibflächen 240, 250 zu der Breite der b_{GRF} der Gegenreibflächen 285, 300, dass die zur Verfügung stehenden Wärmekapazitäten im Gehäuse 205, im Kolben 215 und im Scheibenkörper 255 bei der Bestimmung der Breite b_{RF} der Reibfläche 240, 250 und der entsprechenden Ausbildung der Gegenreibflächen 285, 300 berücksichtigt werden.

Figur 10 zeigt eine Schnittansicht durch eine Reibkupplung 350 gemäß einer achten Ausführungsform. Die Reibkupplung 350 ist ähnlich zu der in den Figuren 3 bis 9 gezeigten Reibkupplung ausgebildet. Abweichend dazu weist die Reibkupplung 350 eine Reibanordnung 355 mit einer Reiblamelle 360 auf, die einen Scheibenkörper 365 umfasst, der mit dem Betätigungselement 230 verbunden ist. An der rechtsseitig angeordneten ersten Stirnfläche 235 umfasst die Reiblamelle 360 einen ersten Reibbelag 370 und einen radial beabstandet und radial innen liegend angeordneten zweiten Reibbelag 375. Gegenüberliegend ist an der zweiten Stirnseite 245 des Scheibenkörpers 365 ein dritter Reibbelag 380 gegenüberliegend zum ersten Reibbelag 370 angeordnet. Gegenüberliegend zum zweiten Reibbelag 375 ist ein vierter Reibbelag 385 an der zweiten Stirnseite 245 des Scheibenkörpers 365 angeordnet. Die Reibbeläge 370, 375, 380, 385 sind, wie oben erwähnt, aus einem faserverstärkten Polymermaterial, das in der Herstellung mit dem Material des Scheibenkörpers 365, insbesondere Stahl, verbacken ist.

Die Reibbeläge 370, 375, 380, 385 sind in der Breite identisch ausgeführt. Zwischen dem ersten Reibbelag 370 und dem zweiten Reibbelag 375, ist ein erster Abschnitt 390 an dem Scheibenkörper 356 angeordnet, der nicht durch einen Reibbelag bedeckt ist, so dass das Grundmaterial des Scheibenkörpers 365 im ersten Abschnitt 390 an der ersten Stirnfläche 235 hervortritt. Ebenso ist zwischen dem dritten Reibbelag 380 und dem vierten Reibbelag 385 ein zweiter Abschnitt 395 am Scheibenkörper 365 angeordnet, der nicht durch die Reibbeläge 380, 385 bedeckt ist. Der erste Reibbelag 370 und der zweite Reibbelag 375 bilden zusammen mit dem ersten Abschnitt 390 an der ersten Stirnfläche 235 des Scheibenkörpers 365 eine erste Reibfläche 400 aus. Der dritte Reibbelag 380 und der vierte Reibbelag 385 bilden zusammen mit dem zweiten Abschnitt 395 eine zweite Reibfläche 405 an der zweiten Stirnfläche 235 des Scheibenkörpers 365 der Reiblamelle 360 aus.

An dem Kolben 215 ist im Bereich des ersten Abschnitts 390 gegenüberliegend ein erster Gegenreibbelag 410 befestigt. Radial außenseitig und radial innenseitig ist gegenüberliegend zu dem ersten Reibbelag 370 bzw. zu dem zweiten Reibbelag 375 korrespondierend ein dritter Abschnitt 415 und gegenüberliegend zum zweiten Reibbelag 375 ein vierter Abschnitt 420 vorgesehen, die zusammen mit dem ersten Gegenreibbelag 410 eine erste Gegenreibfläche 425 ausbilden. Die erste Gegenreibfläche 425 weist dabei die gleiche radiale Erstreckung auf, wie die erste Reibfläche 400.

Gegenüberliegend zu der ersten Gegenreibfläche 425 ist an dem Gehäuse 205 eine zweite Gegenreibfläche 430, die einen zweiten Gegenreibbelag 435 umfasst, ausgebildet, der an einer der zweiten Stirnfläche 245 gegenüberliegenden Seitenfläche des Gehäuses 205 am Gehäuse 205 befestigt ist. Der zweite Gegenreibbelag 435 weist dabei eine korrespondierende zum zweiten Abschnitt 395 ausgebildete radiale Erstreckung auf. Radial außenseitig und radial innenseitig zum zweiten Gegenreibbelag 435 ist ein fünfter Abschnitt 440 bzw. ein sechster Abschnitt 445 an dem Gehäuse 205 innenseitig angeordnet. Dabei weist die zweite Gegenreibfläche 430 die gleiche radiale Erstreckung wie die korrespondierende zweite Reibfläche 405 auf. Im dritten bis sechsten Abschnitt 415, 420, 435, 440 ist keine Beschichtung am Kolben 215 bzw. am Gehäuse 205 angeordnet, so dass unbedeckt das Grundmaterial des Kolbens 215 bzw. des Gehäuses 205 den Reibbelägen 370, 375, 380, 385 gegenüber liegt.

Wird der Kolben 215 betätigt, so wird die erste Reibfläche 400 in Wirkverbindung gebracht bzw. an die erste Gegenreibfläche 425 gedrückt. Ebenso wird die zweite Reibfläche 405 an die zweite Gegenreibfläche 430 gedrückt. Bei dem Andrücken liegt sodann der erste Reibbelag 370 am korrespondierend ausgebildeten dritten Abschnitt 415 an. Ebenso liegt der zweite Reibbelag 375 am dritten Abschnitt 420 sowie der erste Gegenreibbelag 410 am ersten Abschnitt 390 an. Aufgrund der symmetrischen Ausgestaltung der zweiten Gegenreibfläche 430 und der zweiten Reibfläche 405 an der zweiten Stirnfläche 445 zu der ersten Reibfläche 400 und der ersten Gegenreibfläche 425 liegen die entsprechenden (Gegen-) Reibbeläge 380, 435, 385 an den entsprechenden Abschnitten 440, 395, 445 an.

In der Ausführungsform sind der erste Gegenreibbelag 410 und der zweite Gegenreibbelag 435 derart ausgebildet, dass sie beabstandet zwischen dem ersten Reibbelag 370 bzw. dritten Reibbelag 380 und dem zweiten Reibbelag 375 bzw. vierten Reibbelag 385 angeordnet sind. Dabei weisen die Reibbeläge 370, 375, 380, 385 sowie die Gegenreibbeläge 410, 435 die gleiche radiale Erstreckung auf. Selbstverständlich ist auch denkbar, dass die radiale Erstreckung der Reibbeläge 370, 375, 380, 385 sowie der Gegenreibbeläge 410, 435 unterschiedlich zueinander ausgebildet ist. Auch ist denkbar, dass der Gegenreibbelag 410, 435 ohne Abstand zwischen dem ersten bzw. dritten Reibbelag 370, 380 und dem zweiten bzw. vierten Reibbelag 375, 385 beim Andrücken eintaucht.

Die in der Ausführungsform gezeigte Reibanordnung 355 hat den Vorteil, dass die Wärmekapazität dadurch erhöht werden kann, dass auch Reibwärme über den fünften Abschnitt 390 bzw. sechsten Abschnitt 395 in den Scheibenkörper 365 der Reiblamelle 360 eingebracht werden kann. Dadurch kann die insgesamt zur Verfügung stehende Wärmekapazität zur Aufnahme von Reibwärme im Einkuppelvorgang oder einer schleifenden Kuppelung um die Wärmekapazität des Scheibenkörpers 365 bzw. für kurzzeitige Reibvorgänge um die Wärmekapazität im Bereich der Abschnitte 390, 395 erhöht werden.

Figur 11 zeigt eine Schnittansicht durch eine Reibkupplung 450. Die Reibkupplung 450 ist dabei ähnlich zu den in Figuren 2 bis 10 gezeigten Reibkupplungen ausgebildet. Dabei weist die Reibkupplung eine Reibanordnung 455 auf, die ähnlich zu der in Figur 10 gezeigten Reibanordnung ausgebildet ist. Die Ausbildung der Reibanordnung 455 an der ersten Stirnseite 235 mit der ersten Reibfläche 400 und der entsprechenden Gegenreibfläche 425 in der Ausbildung der in Figur 10 dargestellten Ausführungsform. Die linksseitig an der zweiten Stirnseite des Scheibenkörpers 365 gezeigte Ausführungsform weicht jedoch von der in Figur 10 gezeigten Ausführungsform der Reibanordnung dahingehend ab, dass der dritte Reibbelag 380 direkt angrenzend neben dem vierten Reibbelag 385 radial außen liegend angeordnet ist. Radial außen liegend angrenzend an den dritten Reibbelag 380 ist am Gehäuse 205 der zweite Gegenreibbelag 430 angeordnet. Korrespondierend zum dritten Reibbelag 380 bzw. zum vierten Reibbelag 385 sind an dem Gehäuse 205 radial innen liegend zum zweiten Gegenreibbelag 430 an der Gegenreibfläche 425 der fünfte Abschnitt 440 und der sechste Abschnitt 445 angeordnet. Der zweite Gegenreibbelag 430 ist am Scheibenkörper 365 dem zweiten Abschnitt 395 zugeordnet. Diese Ausgestaltung bewirkt, dass die Reibbeläge 370, 375, 380, 385 unsymmetrisch an dem Scheibenkörper 365 der Reiblamelle 460 angeordnet sind. Wird der Kolben 250 betätigt, so liegen Reibbeläge an den korrespondierenden Abschnitten 390, 395, 415, 420, 440, 445 an und übertragen ein Drehmoment von dem Kolben 215 bzw. dem Gehäuse 205 auf den Scheibenkörper 365. Die beim Reibvorgang eingebrachte Wärme wird dabei sowohl in den Scheibenkörper 365 über die Gegenreibflächen 430, 410 und die korrespondierenden Abschnitte 390, 395 eingebracht. Ferner wird Reibwärme in den Kolben 215 und ins Gehäuse 205 durch die am Scheibenkörper 365 angeordneten Reibbeläge 370, 275, 380, 385 eingebracht. Durch die versetzte Anordnung der am Scheibenkörper 265 angeordneten Abschnitte 390, 395 wird die Wärmekapazität der Reibkupplung 450 insgesamt um die Wärmekapazität zwischen dem Abschnitt 390, 395 und dem Reibbelag 370, 380 angeordneten Volumen des Scheibenkörpers 365 erhöht. Das Volumen, das zwischen den zweiten Reibbelag 375 und dem vierten Reibbelag 385 am Scheibenkörper 365 angeordnet ist, dient in der Ausführungsform als Puffer, um die über den ersten Abschnitt 390 bzw. den zweiten Abschnitt 395 eingeleitete Reibwärme aufzunehmen, zu speichern und langsam an das Kühlöl abgeben zu können.

In der Ausführungsform sind der dritte Reibbelag 380 und der vierte Reibbelag 385 beabstandet nebeneinander angeordnet. Selbstverständlich ist denkbar, dass der dritte Reibbelag 380 und der vierte Reibbelag 385 gemeinsam zu einem Reibbelag 380, 385 verschmolzen sind.

Selbstverständlich ist auch denkbar, dass der zweite Gegenreibbelag 430 radial innen liegend am Gehäuse 205 angeordnet sein kann. Korrespondierend werden hierzu der dritte Reibbelag 380 und der vierte Reibbelag 385 radial außen liegend zu den zweiten Gegenreibbelag 430 am Scheibenkörper 365 angeordnet.

Alternativ wäre auch denkbar, die vorgenannte Kombination mit der in Figur 10 gezeigten Ausführungsform der zweiten Gegenreibfläche 430 und der zweiten Reibfläche 405 zu kombinieren.

Die anhand der Figuren 1 bis 11 erläuterte Reibkupplung 10, 200, 310, 320, 330, 340, 350, 450 bzw. die entsprechende Reibanordnung 221, 315, 325, 336, 345, 355, 455 stellen bevorzugte bzw. beispielhafte Ausführungsformen der Erfindung dar. Darüber hinaus sind weitere Ausführungsformen vorstellbar, welche weitere Abwandlungen bzw. Kombinationen von Merkmalen umfassen können.

### Bezugszeichenliste

- 10: Reibkupplung (erste Ausführungsform)
- 15: Eingangsseite
- 20: Ausgangsseite
- 25: Drehachse
- 30: Gehäuse
- 35: Zentrierbuchse
- 40: Schweissverbindung
- 45: Kolben
- 50: Dichtring
- 55: Druckraum
- 60: Öffnung
- 65: Fliehölblech
- 70: Fliehöldruckraum
- 75: Betätigungsabschnitt
- 80: erste Endlamelle
- 85: Lamellenpaket
- 90: Innenlamellenträger
- 95: Außenverzahnung
- 100: Außenlamellenträger
- 105: Betätigungselement
- 106: Reibanordnung
- 110: erste Gruppe
- 115: erste Reiblamelle
- 116: erster Scheibenkörper
- 120: Innenverzahnung
- 125: zweite Gruppe von Reiblamellen
- 130: zweite Reiblamelle
- 131: zweiter Scheibenkörper
- 135: Außenverzahnung der zweiten Reiblamelle
- 140: Innenverzahnung des Außenlamellenträgers
- 145: erster Reibbelag
- 150: zweiter Reibbelag
- 160: Stirnseite
- 165: Stirnseite
- 170: erster Abschnitt
- 175: erste Reibfläche
- 180: zweite Reibfläche
- 185: zweiter Abschnitt
- 190: erste Gegenreibfläche
- 195: zweite Gegenreibfläche
- 200: Reibkupplung (zweite Ausführungsform)
- 205: Gehäuse
- 210: Blattfeder
- 215: Kolben
- 220: Nietverbindung
- 221: Reibanordnung
- 225: Reiblamelle
- 230: Betätigungselement
- 235: erste Stirnfläche der Reiblamelle
- 240: erster Reibbelag
- 245: zweite Stirnfläche
- 250: zweiter Reibbelag
- 255: erste Reibfläche
- 260: erster Abschnitt
- 265: Scheibenkörper
- 270: zweite Reibfläche
- 275: zweiter Abschnitt
- 280: erste Gegenreibfläche
- 285: erster Gegenreibbelag
- 290: dritter Abschnitt
- 295: zweite Gegenreibfläche
- 300: zweiter Gegenreibbelag
- 305: vierter Abschnitt
- 306: Spalt
- 310: Reibkupplung (dritte Ausführungsform)
- 315: Reibanordnung
- 320: Reibkupplung (vierte Ausführungsform)
- 325: Reibanordnung
- 330: Reibkupplung (fünfte Ausführungsform)
- 335: Reibkupplung (sechste Ausführungsform)
- 336: Reibanordnung
- 337: Überlappungsabschnitt
- 340: Reibkupplung (siebte Ausführungsform)
- 345: Reibanordnung
- 350: Reibkupplung (achte Ausführungsform)
- 355: Reibanordnung
- 360: Reiblamelle
- 365: Scheibenkörper
- 370: erster Reibbelag
- 375: zweiter Reibbelag
- 380: dritter Reibbelag
- 385: vierter Reibbelag
- 390: erster Abschnitt
- 395: vierter Abschnitt
- 400: erste Reibfläche
- 405: zweite Reibfläche
- 410: erster Gegenreibbelag
- 415: zweiter Abschnitt
- 420: dritter Abschnitt
- 425: erste Gegenreibfläche
- 430: zweite Gegenreibfläche
- 435: zweiter Gegenreibbelag
- 440: fünfter Abschnitt
- 445: sechster Abschnitt
- 450: Reibkupplung (neunte Ausführungsform)
- 455: Reibanordnung
- 460: Reiblamelle

## Patentansprüche

1. Reibkupplung (10; 200; 310; 320; 330; 335; 340; 350; 450) für ein Kraftfahrzeug mit
- wenigstens einer Reiblamelle (115, 130; 225; 360; 460), die drehbar um eine Drehachse (25) angeordnet ist, aufweisend einen Scheibenkörper (116, 131; 265; 365) und einer an einer ersten Stirnfläche (160; 235) der Reiblamelle (115, 130; 225; 360; 460) angeordneten ersten Reibfläche (175; 255; 400),
- wobei gegenüberliegend zur ersten Reibfläche (175; 255; 400) eine erste Gegenreibfläche (180, 190, 270, 405) vorgesehen ist,
- wobei an der ersten Reibfläche (175; 255; 400) ein erster an dem Scheibenkörper (116, 131; 265; 365) der Reiblamelle (115, 130; 225; 360; 460) befestigte Reibbelag (145; 240; 370, 380) angeordnet ist und an der ersten Gegenreibfläche (190; 280; 425) ein erster Gegenreibbelag (145; 285; 410) und ein vom ersten Gegenreibbelag (145; 285; 410) unbedeckter erster Abschnitt (170; 290; 415, 420) vorgesehen sind,
- wobei der erste Reibbelag (145; 240; 370, 375) ausgebildet ist, mit der ersten Gegenreibfläche (190; 280; 425) im Bereich des unbedeckten ersten Abschnitts (170; 290; 415, 420) und der erste Gegenreibbelag (145; 285; 410) ausgebildet ist, mit dem Scheibenkörper (116, 131; 265; 365) der Reiblamelle (115, 130; 225; 360; 460) im Bereich der ersten Reibfläche (175; 225; 400) in Wirkkontakt gebracht zu werden,
- wobei an einer zur ersten Stirnfläche (160; 235) gegenüberliegenden zweiten Stirnfläche (165; 245) der Reiblamelle (115, 130; 225; 360; 460) eine zweite Reibfläche (150, 180; 270; 405) vorgesehen ist,
- wobei an der zweiten Reibfläche (180; 270; 405) ein zweiter an dem Scheibenkörper (116, 131; 265; 365) befestigter Reibbelag (150; 250; 380, 385) vorgesehen ist und an der zweiten Gegenreibfläche (195; 295; 435) ein zweiter Gegenreibbelag (145; 300; 435) und ein vom zweiten Gegenreibbelag (150; 300; 435) unbedeckter zweiter Abschnitt (180; 305; 435, 440) vorgesehen sind,
- wobei der zweite Reibbelag (150; 250; 280; 380, 385) ausgebildet ist, mit der zweiten Gegenreibfläche (195; 295; 430) im Bereich des unbedeckten zweiten Abschnitts (180; 305; 435, 440) und der zweite Gegenreibbelag (150; 285; 435) ausgebildet ist, mit dem Scheibenkörper (116, 131; 265; 365) der Reiblamelle (115, 130; 225; 360; 460) im Bereich der zweiten Reibfläche (180; 270; 405) in Wirkkontakt gebracht zu werden, **dadurch gekennzeichnet, dass** die Reiblamelle (360; 460) an der ersten Reibfläche (400) einen dritten Reibbelag (375) aufweist, der radial beabstandet zum ersten Reibbelag (370) an dem Scheibenkörper (365) der Reiblamelle (360; 460) angeordnet ist.

2. Reibkupplung (10; 200; 310; 320; 330; 335; 340; 350; 450) nach Anspruch 1, **dadurch gekennzeichnet, dass** der erste Reibbelag (145; 240; 375) der ersten Reibfläche (175; 255; 400) zu dem ersten Gegenreibbelag (150; 285; 435) der ersten Gegenreibfläche (190; 280; 425) bezogen auf die Drehachse (25) radial innen liegend oder dass der erste Reibbelag (145; 240; 370) der ersten Reibfläche (175; 255; 400) zu dem ersten Gegenreibbelag (150; 285; 435) der ersten Gegenreibfläche (190; 280; 425) bezogen auf die Drehachse (25) radial außen liegend angeordnet ist.

3. Reibkupplung (10; 320; 335; 450) nach Anspruch 1 oder 2, **dadurch gekennzeichnet, dass** der erste Reibbelag (145; 240; 375) der ersten Reibfläche (175; 255; 400) bezogen auf die Drehachse (25) radial innen liegend zu dem zweiten Reibbelag (150; 250; 380) der zweiten Reibfläche (180; 270; 405) angeordnet ist.

4. Reibkupplung (10; 200; 310; 320; 330; 335; 340) nach Anspruch 3, **dadurch gekennzeichnet, dass** der erste Reibbelag (145; 240) der ersten Reibfläche (175; 255) und der zweite Reibbelag (150; 250) der zweiten Reibfläche (180; 270) projiziert in Richtung der Drehachse (25) auf die erste oder zweite Reibfläche (175; 255; 180; 270) die erste oder zweite Reibfläche (175; 255; 180; 270) im Wesentlichen vollständig bedecken.

5. Reibkupplung (335) nach Anspruch 4, **dadurch gekennzeichnet, dass** der erste Reibbelag (240) und der zweite Reibbelag (250) projiziert in Richtung der Drehachse (25) auf die erste oder zweite Reibfläche (255, 270) radial überlappend an der Reiblamelle (225) angeordnet sind.

6. Reibkupplung (10; 200; 310; 320; 350; 450) nach einem der Ansprüche 1 bis 5, **dadurch gekennzeichnet, dass** der erste oder zweite Reibbelag (145, 150; 240, 250; 370, 375, 380, 385) und der korrespondierende erste oder zweite Gegenreibbelag (145, 150; 285, 300; 410, 435) in radialer Richtung eine im Wesentlichen identische Erstreckung aufweisen.

7. Reibkupplung (350; 450) nach Anspruch 1, **dadurch gekennzeichnet, dass** der erste Gegenreibbelag (410) bei dem Wirkkontakt mit dem Scheibenkörper (365) der Reiblamelle (360; 460) zwischen dem ersten Reibbelag (370) und dem dritten Reibbelag (375) der ersten Reibfläche (400) angeordnet ist.

8. Reibkupplung (350) nach Anspruch 1 oder 7, **dadurch gekennzeichnet, dass** die Reiblamelle (360) an der zweiten Reibfläche (405) einen vierten Reibbelag (385) aufweist, der radial beabstandet zum zweiten Reibbelag (380) an dem Scheibenkörper (365) der Reiblamelle (360) angeordnet ist.

9. Reibkupplung (350) nach Anspruch 8, **dadurch gekennzeichnet, dass** der zweite Gegenreibbelag (435) bei dem Wirkkontakt mit dem Scheibenkörper (365) der Reiblamelle (360) zwischen dem zweiten Reibbelag (380) und dem vierten Reibbelag (385) der zweiten Reibfläche (405) angeordnet ist.

10. Reibkupplung (350; 450) nach Anspruch 8 oder 9, **dadurch gekennzeichnet, dass** der erste Reibbelag (370) der ersten Reibfläche (400) zum zweiten Reibbelag (380) der zweiten Reibfläche (405) und der dritte Reibbelag (375) der ersten Reibfläche (370) zu dem vierten Reibbelag (385) der zweiten Reibfläche (405) symmetrisch gegenüberliegend am Scheibenkörper (365) der Reiblamelle (360) angeordnet sind.

11. Reibkupplung (350; 450) nach Anspruch 8 oder 9, **dadurch gekennzeichnet, dass** der zweite Reibbelag (375) der ersten Reibfläche (400) zum vierten Reibbelag (385) der zweiten Reibfläche (405) gegenüberliegend am Scheibenkörper (365) der Reiblamelle (360) angeordnet sind, wobei der zweite Reibbelag (380) der zweiten Reibfläche (405) direkt angrenzend an den vierten Reibbelag (385) an der zweiten Reibfläche (405) angeordnet ist.

12. Reibkupplung nach einem der vorangehenden Ansprüche, wobei die Reibkupplung als Anfahrkupplung oder Wandlerüberbrückungskupplung, Doppelkupplung oder als Kupplung in einem Hybridantriebsstrang ausgebildet ist.

## Claims

1. Friction clutch (10; 200; 310, 320; 330; 335; 340; 350; 450) for a motor vehicle having
- at least one friction disc (115, 130; 225; 360; 460) which is arranged such that it can be rotated about a rotational axis (25), having a disc body (116, 131; 265; 365) and a first friction face (175; 255; 400) which is arranged on a first end face (160; 235) of the friction disc (115, 130; 225; 360; 460),
- a first counter-friction face (180, 190, 270, 405) being provided so as to lie opposite the first friction face (175; 255; 400),
- a first friction lining (145; 240; 370, 380) which is fastened to the disc body (116, 131; 265; 365) of the friction disc (115, 130; 225; 360; 460) being arranged on the first friction face (175; 255; 400), and a first counter-friction lining (145; 285; 410) and a first section (170; 290; 415, 420) which is not covered by the first counter-friction lining (145; 285; 410) being provided on the first counter-friction face (190; 280; 425),
- the first friction lining (145; 240; 370, 375) being configured to be brought into operative contact with the first counter-friction face (190; 280; 425) in the region of the non-covered first section (170; 290; 415, 420), and the first counter-friction lining (145; 285; 410) being configured to be brought into operative contact with the disc body (116, 131; 265; 365) of the friction disc (115, 130; 225; 360; 460) in the region of the first friction face (175; 225; 400),
- a second friction face (150, 180; 270; 405) being provided on a second end face (165; 245) of the friction lining (115, 130; 225, 360; 460), which second end face (165; 245) lies opposite the first end face (160; 235),
- a second friction lining (150; 250; 380, 385) which is fastened to the disc body (116, 131; 265; 365) being provided on the second friction face (180; 270; 405), and a second counter-friction lining (145; 300; 435) and a second section (180; 305; 435, 440) which is not covered by the second counter-friction lining (150; 300; 435) being provided on the second counter-friction face (195; 295; 435),
- the second friction lining (150; 250; 280; 380, 385) being configured to be brought into operative contact with the second counter-friction face (195; 295; 430) in the region of the non-covered second section (180; 305; 435, 440), and the second counter-friction lining (150; 285; 435) being configured to be brought into operative contact with the disc body (116, 131; 265; 365) of the friction disc (115, 130; 225; 360; 460) in the region of the second friction face (180; 270; 405),
**characterized in that**
the friction disc (360; 460) has a third friction lining (375) on the first friction face (400), which third friction lining (375) is arranged on the disc body (365) of the friction disc (360; 460) in a manner which is spaced apart radially from the first friction lining (370).

2. Friction clutch (10; 200; 310; 320; 330; 335; 340; 350; 450) according to Claim 1, **characterized in that** the first friction lining (145; 240; 375) of the first friction face (175; 255; 400) is arranged so as to lie radially on the inside with respect to the first counter-friction lining (150; 285; 435) of the first counter-friction face (190; 280; 425) in relation to the rotational axis (25), or **in that** the first friction lining (145; 240; 370) of the first friction face (175; 255; 400) is arranged so as to lie radially on the outside with respect to the first counter-friction lining (150; 285; 435) of the first counter-friction face (190; 280; 425) in relation to the rotational axis (25).

3. Friction clutch (10; 320; 335; 450) according to Claim 1 or 2, **characterized in that** the first friction lining (145; 240; 375) of the first friction face (175; 255; 400) is arranged so as to lie radially on the inside with respect to the second friction lining (150; 250; 380) of the second friction face (180; 270; 405) in relation to the rotational axis (25).

4. Friction clutch (10; 200; 310; 320; 330; 335; 340) according to Claim 3, **characterized in that** the first friction lining (145; 240) of the first friction face (175; 255) and the second friction lining (150; 250) of the second friction face (118; 270) cover the first or second friction face (175; 255; 180; 270) substantially completely in a manner which is projected in the direction of the rotational axis (25) onto the first or second friction face (175; 255; 180; 270).

5. Friction clutch (335) according to Claim 4, **characterized in that** the first friction lining (240) and the second friction lining (250) are arranged on the friction disc (225) so as to overlap radially in a manner which is projected in the direction of the rotational axis (25) onto the first or second friction face (255, 270).

6. Friction clutch (10; 200; 310; 320; 350; 450) according to one of Claims 1 to 5, **characterized in that** the first or second friction lining (145, 150; 240, 250; 370, 375, 380, 385) and the corresponding first or second counter-friction lining (145, 150; 285, 300; 410, 435) have a substantially identical extent in the radial direction.

7. Friction clutch (350; 450) according to Claim 1, **characterized in that**, in the case of the operative contact with the disc body (365) of the friction disc (360; 460), the first counter-friction lining (410) is arranged between the first friction lining (370) and the third friction lining (375) of the first friction face (400).

8. Friction clutch (350) according to Claim 1 or 7, **characterized in that** the friction disc (360) has a fourth friction lining (385) on the second friction face (405), which fourth friction lining (385) is arranged on the disc body (365) of the friction disc (360) in a manner which is spaced apart radially from the second friction lining (380).

9. Friction clutch (350) according to Claim 8, **characterized in that**, in the case of the operative contact with the disc body (365) of the friction disc (360), the second counter-friction lining (435) is arranged between the second friction lining (380) and the fourth friction lining (385) of the second friction face (405).

10. Friction clutch (350; 450) according to Claim 8 or 9, **characterized in that** the first friction lining (370) of the first friction face (400) is arranged on the disc body (365) of the friction disc (360) so as to lie symmetrically opposite the second friction lining (380) of the second friction face (405), and the third friction lining (375) of the first friction face (370) is arranged on the disc body (365) of the friction disc (360) so as to lie symmetrically opposite the fourth friction lining (385) of the second friction face (405).

11. Friction clutch (350; 450) according to Claim 8 or 9, **characterized in that** the second friction lining (375) of the first friction face (400) is arranged on the disc body (365) of the friction disc (360) so as to lie opposite the fourth friction lining (385) of the second friction face (405), the second friction lining (380) of the second friction face (405) being arranged on the second friction face (405) so as to directly adjoin the fourth friction lining (385).

12. Friction clutch according to one of the preceding claims, the friction clutch being configured as a start-up clutch or a converter lock-up clutch, a double clutch or as a clutch in a hybrid drive train.

## Revendications

1. Embrayage à friction (10; 200; 310; 320; 330; 340; 350; 450) pour un véhicule automobile, avec
- au moins un disque de friction (115, 130; 225; 360; 460), qui est disposé de façon rotative autour d'un axe de rotation (25), présentant un corps de disque (116, 131; 265; 365) et une première face de friction (175; 255; 400) disposée sur une première face frontale (160; 235) du disque de friction (115, 130; 225; 360; 460),
- dans lequel il est prévu en face de la première face de friction (175; 255; 400) une première face de friction opposée (180, 190, 270, 405),
- dans lequel une première garniture de friction (145; 240; 370, 380) fixée sur le corps de disque (116, 131; 265; 365) du disque de friction (115, 130; 225; 360; 460) est disposée sur la première face de friction (175; 225; 400) et il est prévu sur la première face de friction opposée (190; 280; 425) une première garniture de friction opposée (145; 285; 410) et une première partie (170; 290; 415, 420) non couverte par la première garniture de friction opposée (145; 285; 410),
- dans lequel la première garniture de friction (145; 240; 370, 375) est réalisée de façon à être mise en contact actif avec la première face de friction opposée (190; 280; 425), dans la région de la première partie non couverte (170; 290; 415, 420) et la première garniture de friction opposée (145; 285; 410) est réalisée de façon à être mise en contact actif avec le corps de disque (116, 131; 265; 365) du disque de friction (115, 130; 225; 360; 460) dans la région de la première face de friction (175; 225; 400),
- dans lequel il est prévu une deuxième face de friction (150, 180; 270; 405) sur une deuxième face frontale (165; 245) du disque de friction (115, 130; 225; 360; 460) opposée à la première face frontale (160; 235),
- dans lequel il est prévu sur la deuxième face de friction (180; 270; 405) une deuxième garniture de friction (150; 250; 380; 385) fixée au corps de disque (116, 131; 265; 365) et il est prévu sur la deuxième face de friction opposée (195; 295; 435) une deuxième garniture de friction opposée ((145; 300; 435) et une deuxième partie (180; 305; 435, 440) non couverte par la deuxième garniture de friction opposée (150; 300; 435),
- dans lequel la deuxième garniture de friction (150; 250; 280; 380, 385) est réalisée de façon à être mise en contact actif avec la deuxième face de friction opposée (195; 295; 430) dans la région de la deuxième partie non couverte (180; 305; 435, 440) et la deuxième garniture de friction opposée (150; 285; 435) est réalisée de façon à être mise en contact actif avec le corps de disque (116, 131; 265; 365) du disque de friction (115, 131; 225; 360; 460) dans la région de la deuxième face de friction (180; 270; 405),
**caractérisé en ce que** le disque de friction (360; 460) présente sur la première face de friction (400) une troisième garniture de friction (375), qui est disposée radialement à distance de la première garniture de friction (370) sur le corps de disque (365) du disque de friction (360; 460).

2. Embrayage à friction (10; 200; 310; 320; 330; 335; 340; 350; 450) selon la revendication 1, **caractérisé en ce que** la première garniture de friction (145; 240; 375) de la première face de friction (175; 255; 400) est disposée radialement à l'intérieur par rapport à la première garniture de friction opposée (150; 285; 435) de la première face de friction opposée (190; 280; 425) par rapport à l'axe de rotation (25) ou **en ce que** la première garniture de friction (145; 240; 370) de la première face de friction (175; 255; 400) est disposée radialement à l'extérieur par rapport à la première garniture de friction opposée (150; 285; 435) de la première face de friction opposée (190; 280; 425) par rapport à l'axe de rotation (25).

3. Embrayage à friction (10; 320; 335; 450) selon la revendication 1 ou 2, **caractérisé en ce que** la première garniture de friction (145; 240; 375) de la première face de friction (175; 255; 400) est disposée radialement à l'intérieur par rapport à l'axe de rotation (25) par rapport à la deuxième garniture de friction (150; 250; 380) de la deuxième face de friction (180; 270; 405).

4. Embrayage à friction (10; 200; 310; 320; 330; 335; 340) selon la revendication 3, **caractérisé en ce que** la première garniture de friction (145; 240) de la première face de friction (175; 255) et la deuxième garniture de friction (150; 250) de la deuxième face de friction (180; 270) projetées dans la direction de l'axe de rotation (25) sur la première ou la deuxième face de friction (175; 255; 180; 270) recouvrent essentiellement complètement la première ou la deuxième face de friction (175; 255; 180; 270).

5. Embrayage à friction (335) selon la revendication 4, **caractérisé en ce que** la première garniture de friction (240) et la deuxième garniture de friction (250) projetées dans la direction de l'axe de rotation (25) sur la première ou la deuxième face de friction (255, 270) sont disposées avec un recouvrement radial sur le disque de friction (225).

6. Embrayage à friction (10; 200; 310; 320; 350; 450) selon l'une quelconque des revendications 1 à 5, **caractérisé en ce que** la première ou la deuxième garniture de friction (145, 150; 240, 250; 370, 375, 380, 385) et la première ou la deuxième garniture de friction opposée correspondante (145, 150; 285, 300; 410, 435) présentent en direction radiale une extension essentiellement identique.

7. Embrayage à friction (350; 450) selon la revendication 1, **caractérisé en ce que** la première garniture de friction opposée (410) est disposée, lors du contact actif avec le corps de disque (365) du disque de friction (360; 460), entre la première garniture de friction (370) et la troisième garniture de friction (375) de la première face de friction (400).

8. Embrayage à friction (350) selon la revendication 1 ou 7, **caractérisé en ce que** le disque de friction (360) présente sur la deuxième face de friction (405) une quatrième garniture de friction (385), qui est disposée radialement à distance de la deuxième garniture de friction (380) sur le corps de disque (365) du disque de friction (360).

9. Embrayage à friction (350) selon la revendication 8, **caractérisé en ce que** la deuxième garniture de friction opposée (435) est disposée, lors du contact actif avec le corps de disque (365) du disque de friction (360), entre la deuxième garniture de friction (380) et la quatrième garniture de friction (385) de la deuxième face de friction (405).

10. Embrayage à friction (350; 450) selon la revendication 8 ou 9, **caractérisé en ce que** la première garniture de friction (370) de la première face de friction (400) par rapport à la deuxième garniture de friction (380) de la deuxième face de friction (405) et la troisième garniture de friction (375) de la première face de friction (370) par rapport à la quatrième garniture de friction (385) de la deuxième face de friction (405) sont disposées l'une en face de l'autre de façon symétrique sur le corps de disque (365) du disque de friction (360).

11. Embrayage à friction (350; 450) selon la revendication 8 ou 9, **caractérisé en ce que** la deuxième garniture de friction (375) de la première face de friction (400) est disposée en face de la quatrième garniture de friction (385) de la deuxième face de friction (405) sur le corps de disque (365) du disque de friction (360), dans lequel la deuxième garniture de friction (380) de la deuxième face de friction (405) est directement adjacente à la quatrième garniture de friction (385) sur la deuxième face de friction (405).

12. Embrayage à friction selon l'une quelconque des revendications précédentes, dans lequel l'embrayage à friction est réalisé sous la forme d'un embrayage de démarrage, d'un embrayage à pontage du convertisseur, d'un embrayage double ou d'un embrayage dans une chaîne cinématique hybride.
